# EUROPEAN PATENT SPECIFICATION

(11) **EP 4 609 252 B1**
(45) Date of publication and mention of the grant of the patent: **09.12.2026**
(21) Application number: 23805762.4
(22) Date of filing: 24.10.2023
(51) Int. Cl.: G02B 6/50, G02B 6/44, H02G 9/10

(54) **MOUNT SYSTEM FOR FIBER OPTIC CLOSURE**
MONTAGESYSTEM FÜR FASEROPTISCHES VERSCHLUSSELEMENT
SYSTÈME DE MONTAGE POUR FERMETURE À FIBRE OPTIQUE

(30) Priority: 24.10.2022 US 202263418752 P; 08.11.2022 US 202263423680 P
(43) Date of publication of application: 03.09.2025
(73) Proprietor: AFL Telecommunications LLC, Duncan, SC 29334 (US)
(72) Inventor: PETERSEN, Mark, Duncan, South Carolina 29334 (US); EBRAHIMI, Vahid, Duncan, South Carolina 29334 (US)
(74) Representative: Serjeants LLP
(86) International application number: PCT/US2023/035756
(87) International publication number: WO 2024/091471

(56) References cited:
- EP-A2- 2 056 145
- US-A- 4 456 225
- US-A1- 2014 196 380
- US-A1- 2015 104 142

## Description

### FIELD

The present disclosure relates generally to mount structures for fiber optic closures.

### BACKGROUND

In many metropolitan areas, fiber optic closures are kept underground (e.g., in handholes) so that fiber optic closures cannot be seen or disrupted by members of the public. The fiber optic closures are secured in various ways underground. In some instances, the fiber optic closure is placed on the ground within a handhole. In still some instances, the fiber optic closure is attached to a pole, a rail, or other member within the handhole.

Known methods and structures may affix the fiber optic closure underground and inhibit articulation of the fiber optic closure. Such fixturing may inhibit movement, removal, or articulation to a position that facilitates maintenance by a technician. Still some structures may be specific to particular geometry of fiber optic closure.

Accordingly, there is a need for structures that allow for universal and standardized placement, attachment, and securing of the fiber optic closure underground. Additionally, there is a need for structures that provide for articulation of the fiber optic closure within or out of a handhole. Still further, there is a need for structures that place a fiber optic closure at a height or location that facilitates operation at the fiber optic structure by a person.

United States Patent Publication No. US 2015/104142 discloses a mount system for a telecommunications closure. The mount system includes an arm with a curved portion positioned between a first end portion and a second end portion. A bracket is attachable to the telecommunications closure. The second bracket includes an arm attachment interface at which the second end portion arm of the arm is attachable. The bracket also includes a mount interface at which the second bracket is attachable to the telecommunications closure.

### BRIEF DESCRIPTION

Aspects and advantages of the invention in accordance with the present disclosure will be set forth in part in the following description, or may be learned through practice of the technology.

An aspect of the present disclosure is directed to a mount system for a telecommunications closure. The mount system includes an arm including a curved portion positioned between a first end portion and a second end portion. The arm forms a first end opening into which a first fastener is extendable and a second end opening into which a second fastener is extendable. A first bracket is attachable to a rail. The first bracket includes a rail body portion into which the rail is extendable. The rail body portion forms a rail body opening into which a third fastener is extendable. The first bracket includes an arm body portion into which the first end portion of the arm is extendable. The arm body portion forms an arm body opening into which the first fastener is extendable. A second bracket is attachable to the telecommunications closure. The second bracket includes an arm attachment interface at which the second end portion arm of the arm is attachable. The second bracket includes a mount interface at which the second bracket is attachable to the telecommunications closure.

These and other features, aspects, and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Fig. 1 depicts a perspective view of an exemplary embodiment of a mount system and telecommunications closure assembly in accordance with aspects of the present disclosure;
Fig. 2 depicts a partially exploded perspective view of the mount system and telecommunications closure assembly of Fig. 1 in accordance with aspects of the present disclosure;
Fig. 3 depicts a perspective view of the mount system in accordance with aspects of the present disclosure;
Fig. 4A depicts a partially exploded perspective view of the mount system in accordance with aspects of the present disclosure;
Fig. 4B depicts a partially exploded perspective view of the mount system in accordance with aspects of the present disclosure;
Fig. 5 depicts a perspective view of a sleeve of an embodiment of the mount system in accordance with aspects of the present disclosure;
Fig. 6 depicts a detailed perspective view of a portion of the mount system and telecommunications closure assembly in accordance with aspects of the present disclosure;
Fig. 7A depicts a perspective view of an embodiment of a forward bracket of the mount system in accordance with aspects of the present disclosure;
Fig. 7B depicts a side view of the forward bracket of Fig. 7A in accordance with aspects of the present disclosure;
Fig. 8A depicts a perspective view of an embodiment of a housing bracket of the mount system in accordance with aspects of the present disclosure;
Fig. 8B depicts a side view of the housing bracket of Fig. 8A in accordance with aspects of the present disclosure;
Fig. 8C depicts a perspective view of an embodiment of a housing bracket of the mount system in accordance with aspects of the present disclosure;
Fig. 9A depicts a perspective view of an embodiment of an arm of the mount system in accordance with aspects of the present disclosure;
Fig. 9B depicts a side view of the arm of Fig. 9A in accordance with aspects of the present disclosure;
Fig. 10A depicts a perspective view of an embodiment of a closure bracket of the mount system in accordance with aspects of the present disclosure;
Fig. 10B depicts a plan view of the closure bracket of Fig. 10A in accordance with aspects of the present disclosure;
Fig. 10C depicts a side view of the closure bracket of Fig. 10A in accordance with aspects of the present disclosure;
Fig. 10D depicts a perspective view of an embodiment of a closure bracket of the mount system in accordance with aspects of the present disclosure;
Fig. 11 depicts a perspective view of an embodiment of a portion of an embodiment of the mount system and telecommunications closure in accordance with aspects of the present disclosure;
Fig. 12 depicts a detailed perspective view of an embodiment of a portion of an embodiment of the mount system and telecommunications closure in accordance with aspects of the present disclosure;
Fig. 13 depicts a detailed perspective view of an embodiment of a portion of an embodiment of the mount system and telecommunications closure in accordance with aspects of the present disclosure;
Fig. 14 depicts a detailed perspective view of an embodiment of a portion of an embodiment of the mount system and telecommunications closure in accordance with aspects of the present disclosure;
Fig. 15 depicts a perspective view of an embodiment of a portion of an embodiment of the mount system and telecommunications closure in accordance with aspects of the present disclosure;
Fig. 16 depicts a plan view of an embodiment of a portion of an embodiment of the mount system and telecommunications closure in accordance with aspects of the present disclosure;
Fig. 17 depicts a top-down view of an embodiment of a telecommunications closure attached to a mount system within an enclosed volume in a stored position in accordance with aspects of the present disclosure;
Fig. 18A depicts an embodiment of a rail for the mount system in a horizontal position in accordance with aspects of the present disclosure;
Fig. 18B depicts an embodiment of the rail of Fig. 18A in a vertical position in accordance with aspects of the present disclosure;
Fig. 19 depicts a side view of an embodiment of a telecommunications closure attached to an embodiment of the mount system within an enclosed volume in a stored position in accordance with aspects of the present disclosure;
Fig. 20 depicts a side view of an embodiment of the telecommunications closure attached to an embodiment of the mount system in a vertical position in accordance with aspects of the present disclosure;
Fig. 21 depicts a side view of an embodiment of the telecommunications closure attached to an embodiment of the mount system in an extended vertical position in accordance with aspects of the present disclosure;
Fig. 22A depicts a front or rear view of an embodiment of the telecommunications closure attached to an embodiment of the mount system in an extended vertical position and a rotated vertical position in accordance with aspects of the present disclosure;
Fig. 22B depicts a side view of the embodiment of the telecommunications closure of Fig. 22A in accordance with aspects of the present disclosure;
Fig. 23A depicts a front or rear view of an embodiment of the telecommunications closure attached to an embodiment of the mount system in an extended vertical position and rotated to a horizontal position in accordance with aspects of the present disclosure;
Fig. 23B depicts a side view of the embodiment of the telecommunications closure of Fig. 23A in accordance with aspects of the present disclosure;
Fig. 24A depicts a first perspective view of an embodiment of the housing bracket and arm in a first rotational position in accordance with aspects of the present disclosure;
Fig. 24B depicts a second perspective view of the housing bracket and arm of Fig. 24A in the first rotational position in accordance with aspects of the present disclosure;
Fig. 25A depicts a second perspective view of the housing bracket and arm of Fig. 24A in the first rotational position in accordance with aspects of the present disclosure;
Fig. 25B depicts a perspective view of the housing bracket and arm of Fig. 25A transitioning to a second rotational position in accordance with aspects of the present disclosure;
Fig. 26A depicts a perspective view of the housing bracket and arm of Fig. 25B in the second rotational position in accordance with aspects of the present disclosure; and
Fig. 26B depicts a perspective view of the housing bracket and arm of Fig. 25A in a third rotational position in accordance with aspects of the present disclosure.

Repeat use of reference characters in the present specification and drawings is intended to represent the same or analogous features or elements of the present invention.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Ranges provided herein are inclusive of their end points. For instance, a range of 1 to 100 includes 1 and 100.

Terms of approximation, such as "about," "generally," "approximately," or "substantially," include values within a ten percent full scale error from a lowest value embodiment to a highest value embodiment. For instance, an embodiment including a range from approximately 10 to approximately 100 with a ten percent full scale error may include values from 1 to 109.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

Embodiments of a mount system 101 for a telecommunications closure system (e.g., fiber optic closure) are provided. Embodiments provided herein allow for universal and standardized placement, attachment, and securing of the telecommunications closure in an enclosed volume, such as an underground volume, confined space, or handhole. Embodiments provided herein may allow for articulation of the telecommunications closure within or out of an underground or enclosed volume. Additionally, or alternatively, embodiments of the mount system provided herein may allow for the telecommunications closure to be articulated, such as translated, rotated, or extended, to a height or location that facilitates operation at the telecommunications closure, such as by a technician. Such articulation may facilitate ergonomic placement, provide improved articulation and adjustment of the telecommunications closure, and allow for attachment of the mount system to various types of telecommunications closures and mount interfaces.

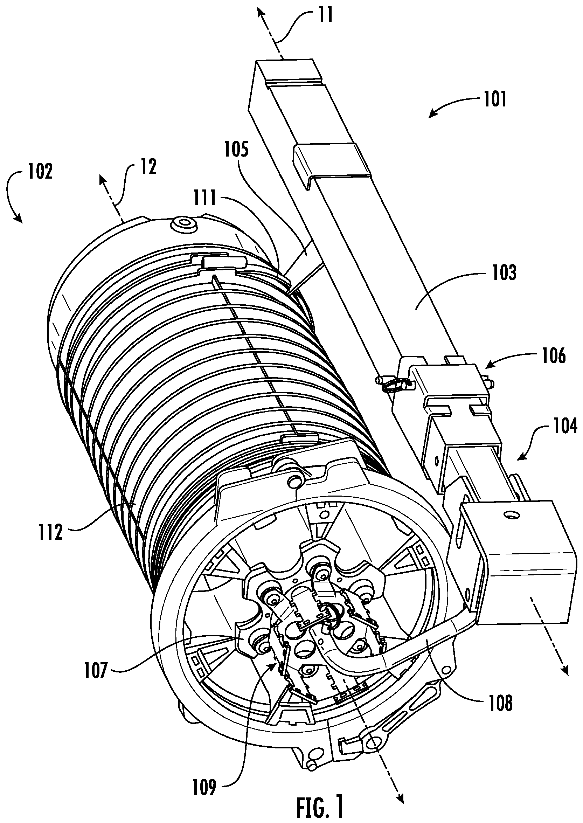

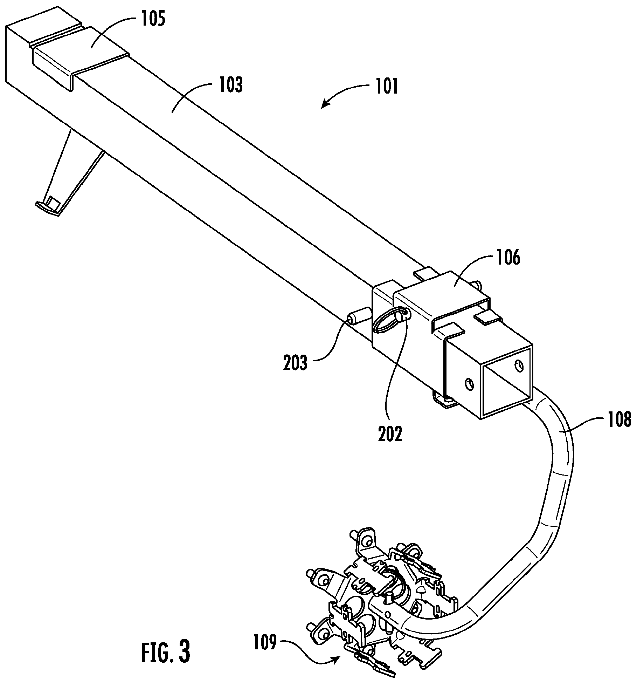

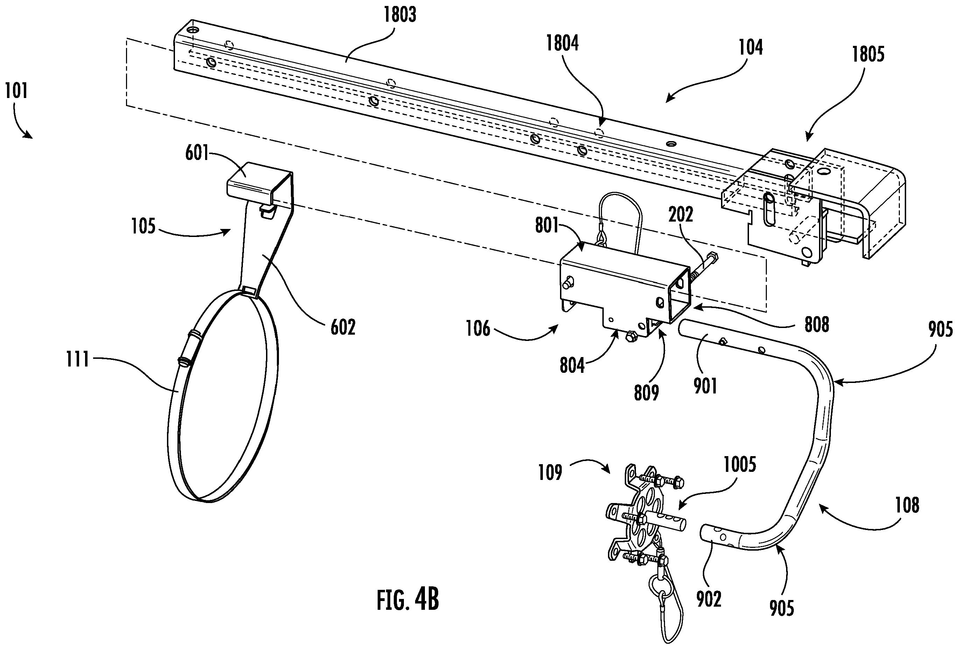

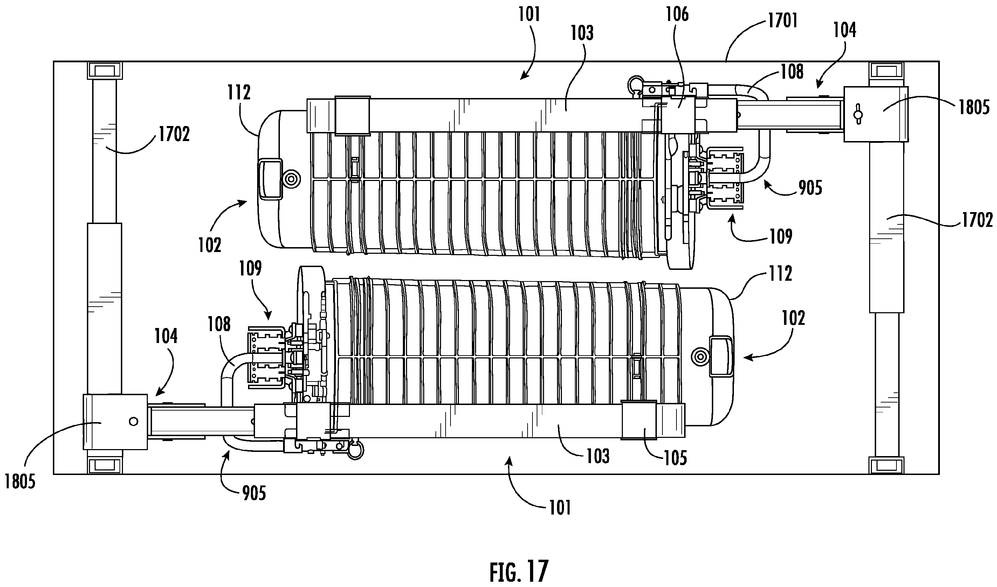

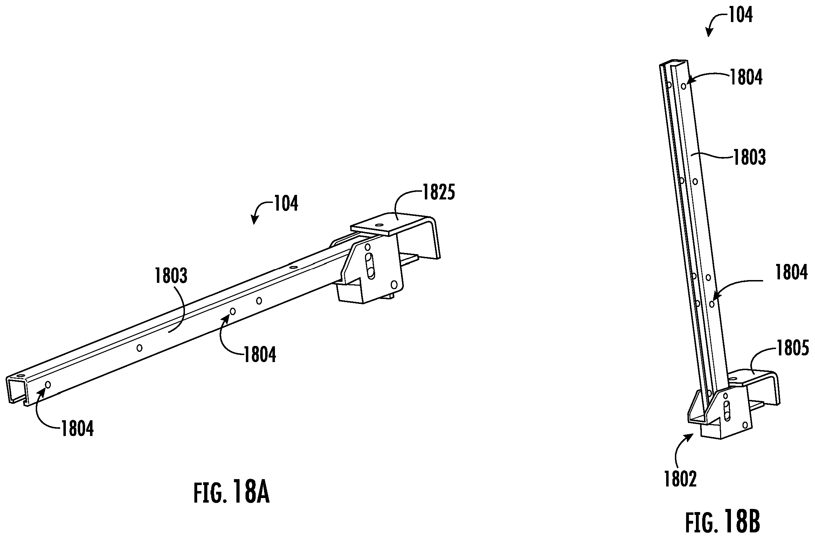

Referring to the drawings, Figs. 1-3 and Figs. 4A-4B depict embodiments of the mount system 101 attachable to a rail 104, such as a telescoping and/or rotatable rail system mountable to a mount member 1702 at an enclosed volume 1701 (Fig. 17). The rail 104 may generally include a rail pivot portion 1802 (Fig. 4B, Figs. 18A-18B) configured to allow a mount bar 1803 to rotate between a first position (e.g., horizontal, or substantially parallel to the ground, e.g., Fig. 18A) and a second position (e.g., vertical or substantially perpendicular to the ground, e.g., Fig. 18B), or one or more positions therebetween. The rail 104 includes a mount attachment portion 1805 configured to wrap, couple, or fasten to the mount member 1702 (Fig. 17). In some embodiments, the rail 104 may include, but is not limited to, a Cubis Systems Mobra^{™} Arm or a Hubbell^{™} swing arm. However, it should be appreciated that any suitable rail assembly may be utilized in accordance with descriptions and depictions provided herein.

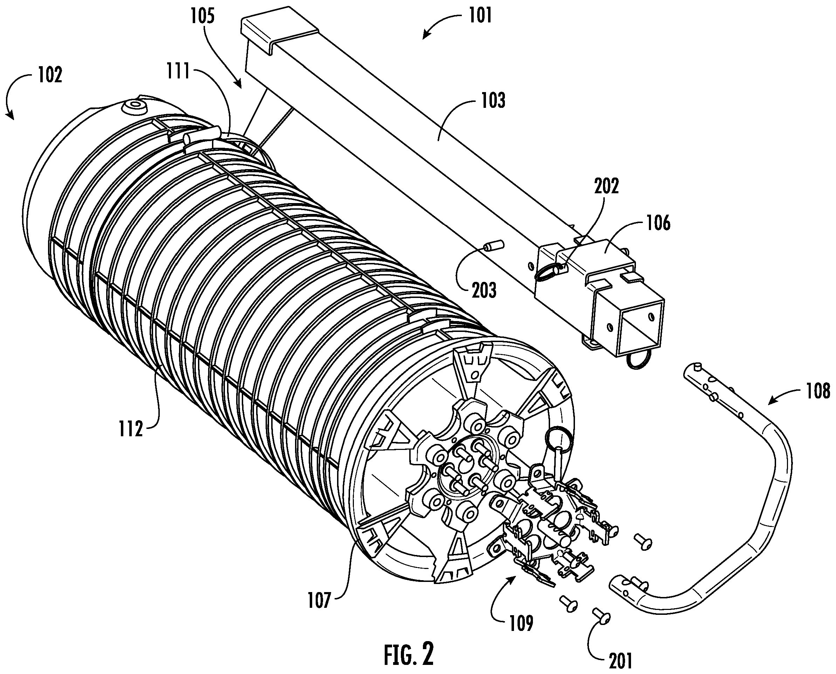

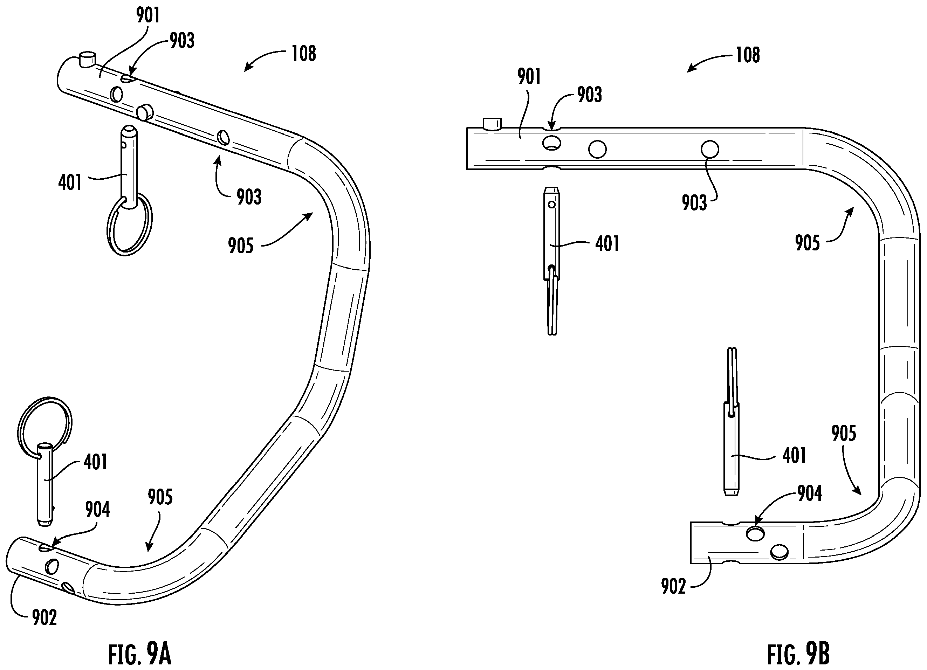

The mount system 101 includes a housing bracket 106 (e.g., a first bracket) selectively attachable to the rail 104, such as at a mount bar 1803 (Fig. 4B, Figs. 18A-18B) of the rail 104. The mount system 101 includes an arm 108 selectively attachable to the housing bracket 106. The arm 108 includes a plurality of curved portions 905 (Fig. 4B, Fig. 9) configured to extend arm 108 from the housing bracket 106 to a closure bracket 109 (e.g., a second bracket). The closure bracket 109 forms a plate, attachment, adapter, or other apparatus configured to attach to a telecommunications closure assembly 102, such as a base portion 107 thereof. For instance, referring to the exploded view in Fig. 2, a closure bracket fastener 201 is selectively extendable into the closure bracket 109 and the base portion 107, such as to affix or secure the closure bracket 109 to the closure assembly 102.

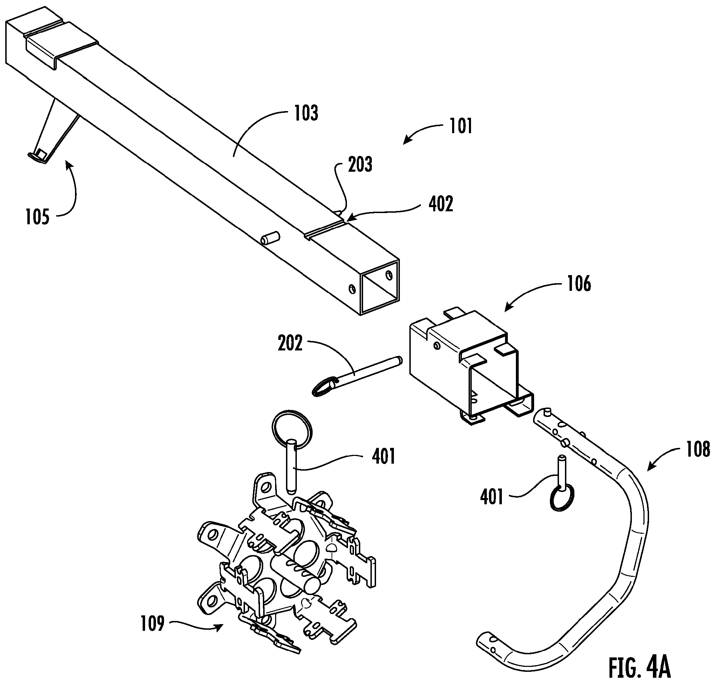

Referring to Figs. 1-2, in some embodiments, a forward bracket 105 (e.g., a third bracket) is selectively attachable to the rail 104, such as at the mount bar 1803 (Fig. 4B, Fig. 18). In still some embodiments, the mount system 101 includes a sleeve 103 selectively positionable around the rail 104, such as around the mount bar 1803 (Fig. 4A, Fig. 18). The sleeve 103 may be translated around the rail 104 and provide a surface at which the brackets 105, 106 are attachable. For instance, the sleeve 103 may form a bar or tube surrounding at least a portion of the mount bar 1803 (Fig. 18). However, it should be appreciated that, in various embodiments, the forward bracket 105 is attachable directly to the rail 104, such as at mount bar 1803.

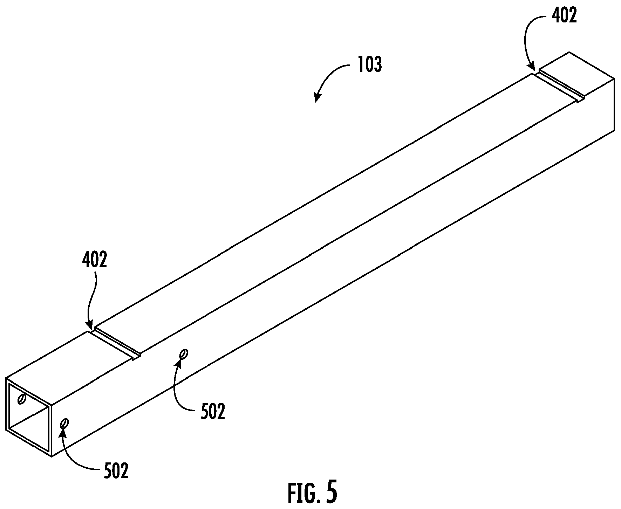

Referring to Fig. 4A and Fig. 5, embodiments of the sleeve 103 may include one or more grooves 402 configured to receive a fastener extending into the housing bracket 106. The groove 402 and fastener (e.g., rail-bracket fastener 202) may extending into an opening at the housing bracket 106 and into the groove 402 to affix the housing bracket 106 at the sleeve 103.

Referring still to Fig. 4A and Fig. 5, embodiments of the sleeve 103 include one or more rail openings 502 configured to receive a fastener 203. The rail opening 502 may correspond in position to one or more mount bar openings 1804 (Fig. 18) at the rail 104. Fastener 203 may extend into openings 502, 1804 to form a detent to limit movement of the housing bracket 106 relative to the sleeve 103, rail 104, or both.

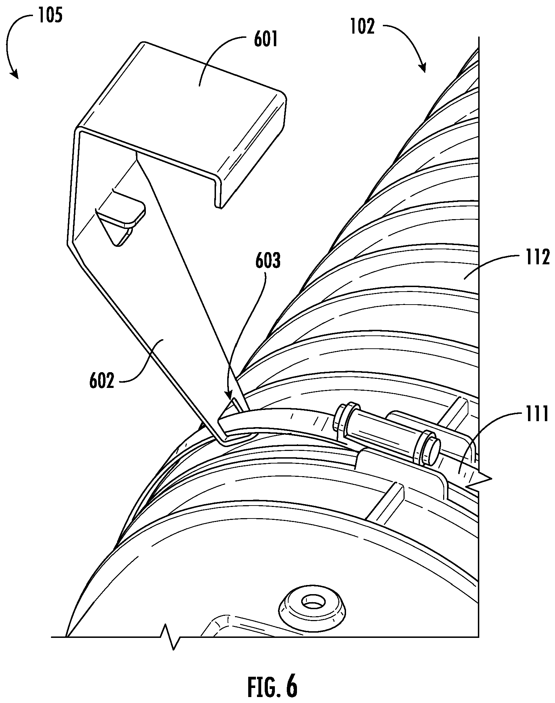

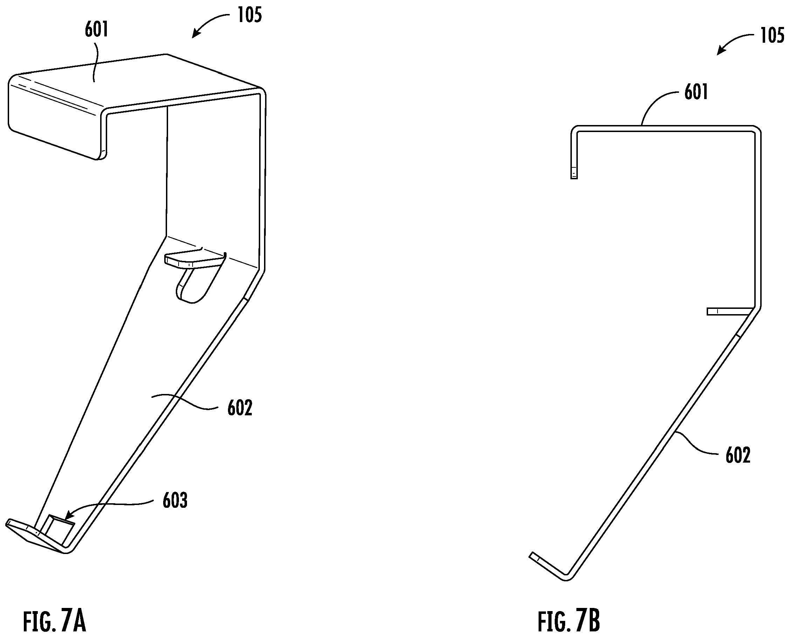

Referring to the detailed view in Fig. 6 and Figs. 7A-7B, the forward bracket 105 may include a rail attachment portion 601 at which the forward bracket 105 is configured to at least partially wrap around the rail 104 or sleeve 103. The rail attachment portion 601 may correspond in cross-section, at least in part, to the sleeve 103, the rail 104, or both. The rail attachment portion 601 may form an open-sided geometry allowing a user to wrap at least a portion of the rail attachment portion 601 onto the sleeve 103 or rail 104 (e.g., from a radial direction relative to an axis of extension of the sleeve or rail, such as axis 11). The forward bracket 105 includes a linkage attachment portion 602 having an opening 603 at which a linkage 111 is allowed to extend and attach to the forward bracket 105. The linkage attachment portion 602 extends from the rail attachment portion 601. In some embodiments, the linkage attachment portion 602 may extend at an acute angle from the rail attachment portion 601, such as to extend toward a cover, dome, or closure 112 of the closure assembly 102. For instance, the closure assembly 102 may generally be positioned extending along a second axis 12 separate from a first axis 11 (Fig. 1) forming an axis of extension of the mount bar 1803 (Fig. 18) of the rail 104. The rail attachment portion 602 may form an open-sided component, such as a claw, hook, clamp, or grip, extending at least partially around the rail 104 (e.g., the mount bar 1803).

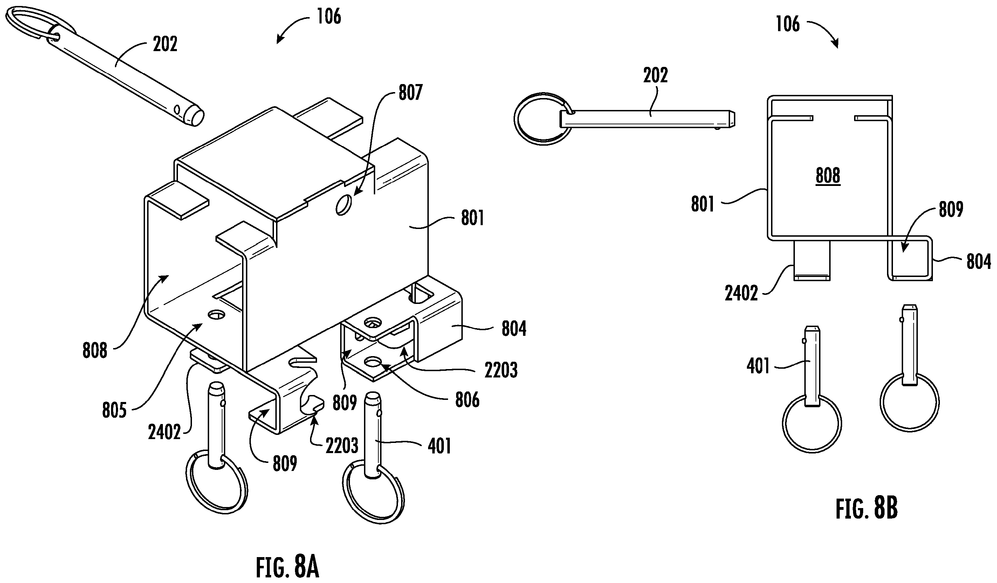

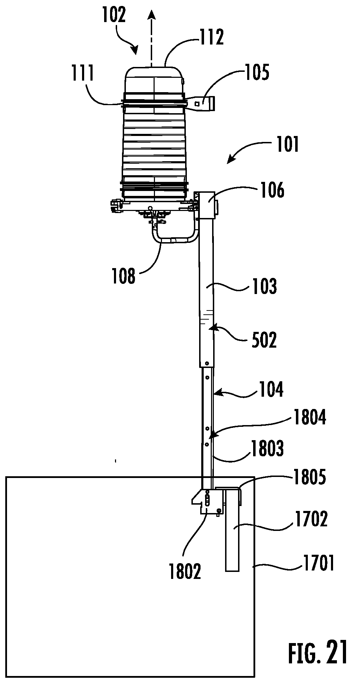

Referring now to Fig. 8A-8B, views of an exemplary embodiment of the housing bracket 106 are provided. The housing bracket 106 includes a rail body portion 801 forming a rail passage 808 through which the sleeve 103, the rail 104, or both, extend. The housing bracket 106 includes an arm body portion 804 forming an arm passage 809 into which the arm 108 is extendable. The housing bracket 106 forms a rail body opening 805 at the rail body portion 801 into which a rail-bracket fastener 202 is extendable into the housing bracket 106 and the sleeve 103, the rail 104, or both, such as to affix the housing bracket 106 to the sleeve 103, the rail 104, or both. The housing bracket 106 forms an arm body opening 806 at the arm body portion 804 into which an arm-bracket fastener 401 is extendable into the housing bracket 106 and the arm 108, such as to affix the housing bracket 106 to the arm 108. In some embodiments, the housing bracket 106 forms a rail-groove opening 807 through which fastener 202 is received through groove 402 (Fig. 4A) at the sleeve 103 and through housing bracket 106. Placement and removal of the fastener 202 through opening 807 and groove 402 may allow the housing bracket 106 to slide along the sleeve 103 to various positions of groove 402, such as depicted in regard to Figs. 21-23.

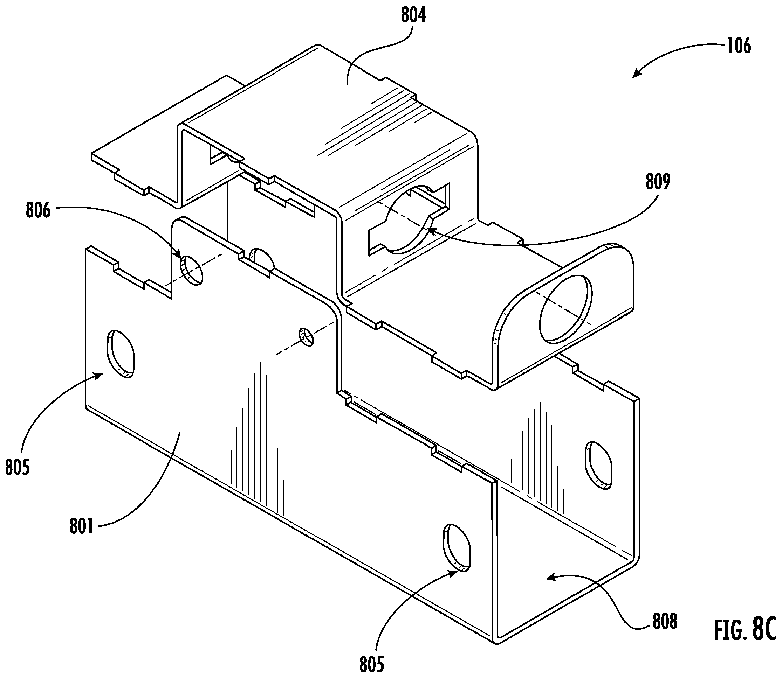

Referring now to Fig. 8C, a perspective view of an exemplary embodiment of the housing bracket 106 is provided. The embodiment depicted in Fig. 8C may be formed substantially similarly as depicted and described in regard to Figs. 8A-8B. For instance, housing bracket 106 forms the arm passage 809 into which the arm 108 is receivable. The housing bracket 106 further forms the rail passage 808 into which the rail 104, such as the mount bar 1803, is receivable. In various embodiments, the housing bracket 106 may form two or more separable portions, such as the arm body portion 804 separable from the rail body portion 801. The separable portions 801, 804 may allow the housing bracket 106 to be positioned over the rail 104 (e.g., along a radial direction relative to axis 11), or translated substantially co-directional to the mount bar 1803 (e.g., translating co-directional to axis 11). One or more openings 805, 806 may be utilized to secure the portions 801, 804 to one another, or to the rail 104, such as described herein.

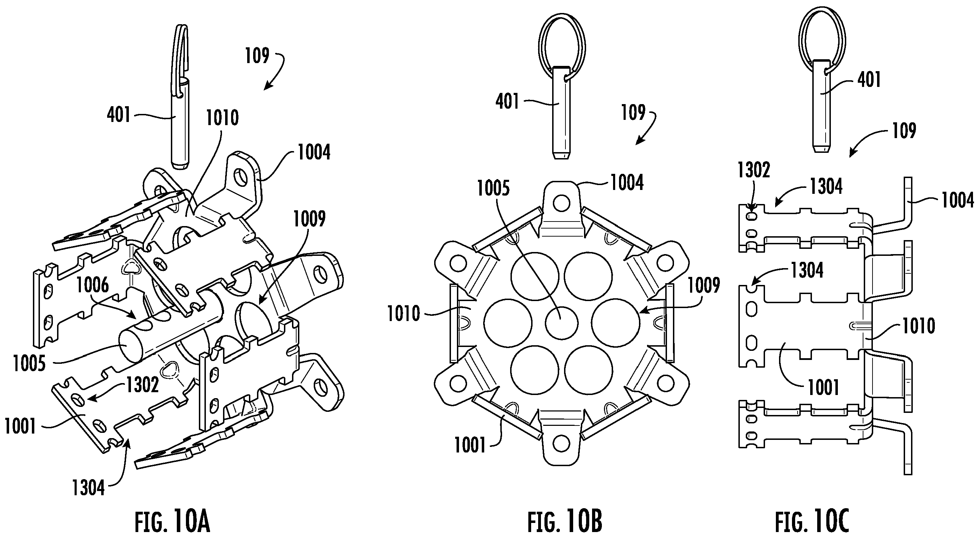

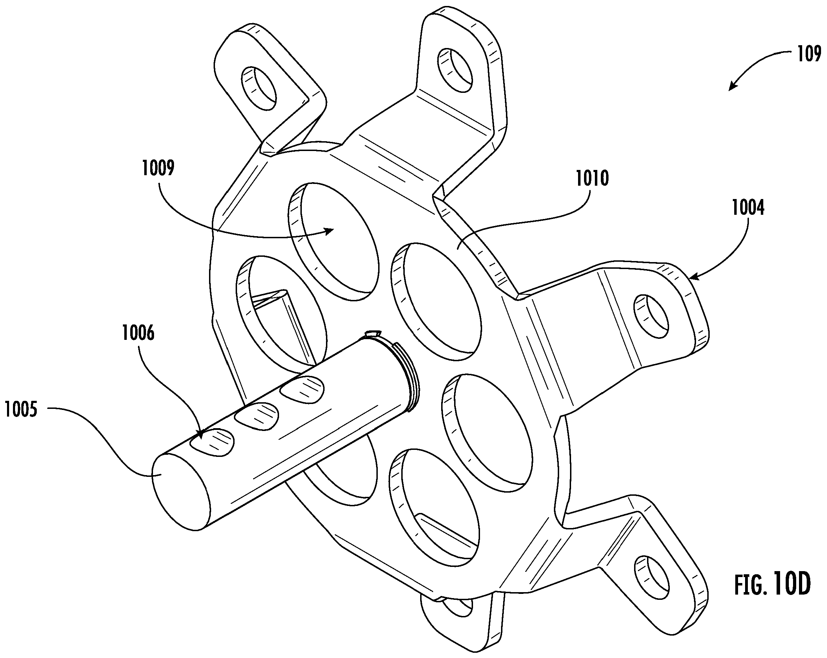

Referring to Fig. 9A-9B, an embodiment of the arm 108 includes a plurality of curved portions 905 between a first end arm opening 903 and a second end arm opening 904. Fasteners 401 are configured to extend into openings 903, 904 to affix the arm 108 to respective brackets 106, 109. For instance, a first end portion 901 of the arm 108 is configured to be received into the arm passage 809 (Fig. 8), such as forming a portion extending co-directional (e.g., straight) to an extension of the arm passage 809. A second end portion 902 of the arm 108 is configured to be received into, or around, an arm attachment interface 1005 (Fig. 10A), such as forming a portion extending co-directional (e.g., straight) to an extension of the arm attachment interface 1005. Fastener 401 is extendable through opening 903 at the arm 108 and opening 806 at the housing bracket 106 to affix the arm 108 to the housing bracket 106 at the arm passage 809. Fastener 401 (e.g., another fastener) is extendable through opening 904 at the arm 108 (e.g., at a distal end from opening 903) and arm attachment opening 1006 (Fig. 10) to affix the arm 108 to the closure bracket 109.

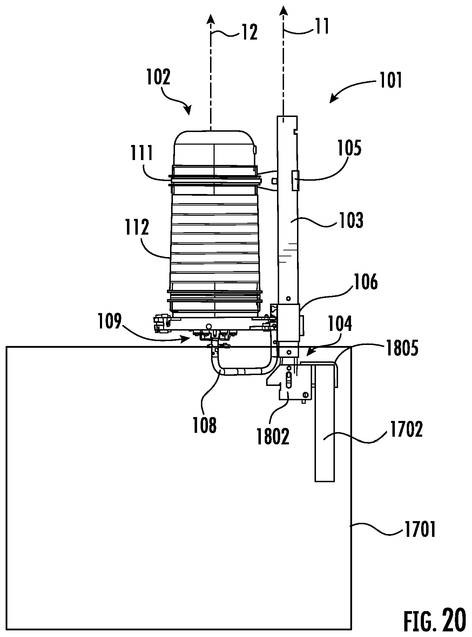

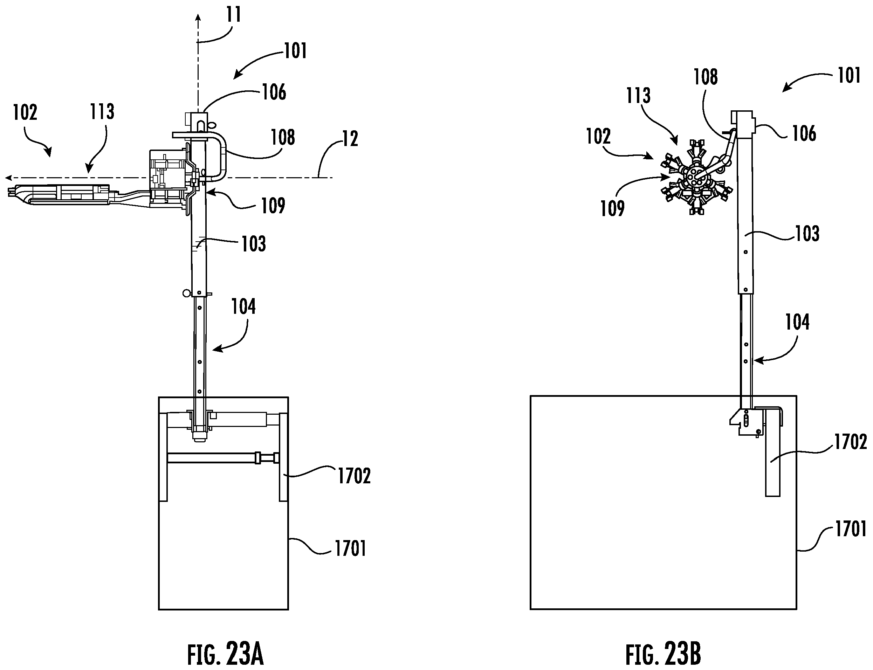

In various embodiments, the curved portion 905 is configured to extend from the first axis 11 along which the rail 104 is extended to the second axis 12 along which the closure 112 is extended. For instance, referring to Fig. 1, a first position of the mount system 101 may position the axes 11, 12 substantially parallel to one another, such as a horizontal position. Figs. 20-22 depict the mount system 101 positioning the axes 11, 12 substantially parallel to one another in a second position, such as a vertical position. In another instance, such as depicted in Fig. 23A, a third position of the mount system 101 may position the axes 11, 12 substantially perpendicular to one another, such as the closure assembly 102 rotated to a horizontal position and the mount bar 1803 (Fig. 18B) of the rail 104 in a vertical position.

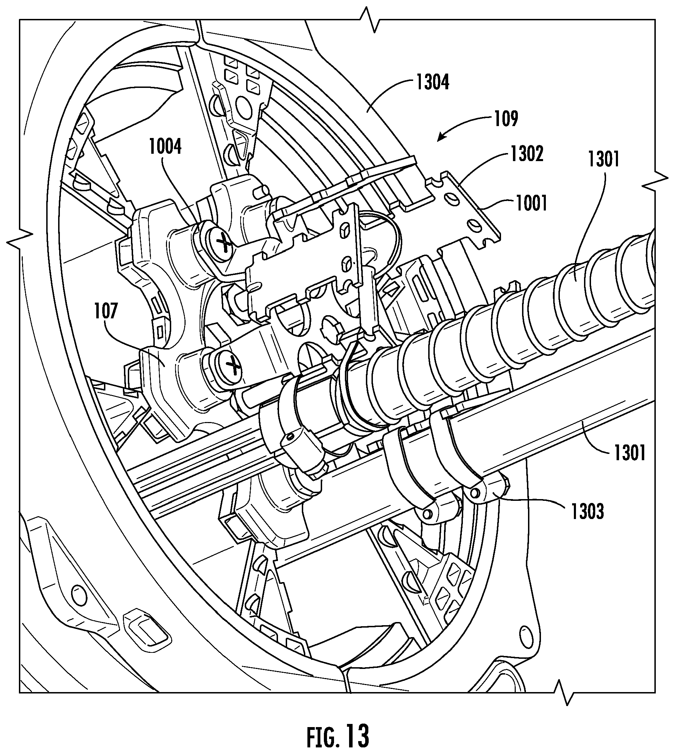

Referring now to Figs. 10A-10D, views of an exemplary embodiment of the closure bracket 109 are provided. The closure bracket 109 includes a plate 1010. A cable port 1009 is formed through the plate 1010 to allow a cable 1301 (Fig. 13) to extend therethrough to ingress into and egress out of the closure assembly 102. One or more legs forms a mount interface 1004 at which the closure-bracket fastener 201 is extendable into the closure bracket 109 and the closure assembly 102. For instance, the mount interface 1004 includes an opening through which the fastener 201 is extendable. In some embodiments, the plate 1010 is configured to providing a mating interface to attach to the base portion 107 (Fig. 1) of the closure assembly 102.

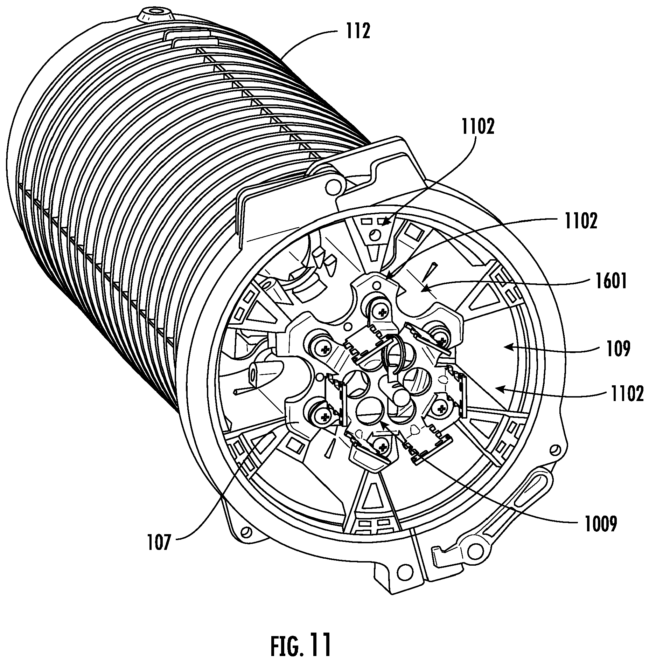

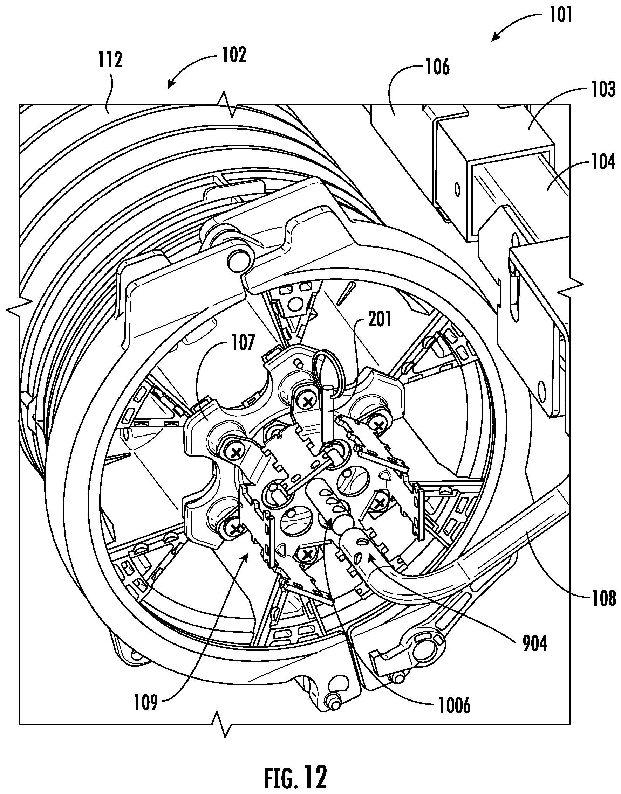

Referring still to Figs. 10A-10D, and furthermore to Figs. 11-12, an arm attachment interface 1005 extends from the plate 1010. The arm attachment interface 1005 may form a rod, cylinder, bar, or other member at which the arm 108 is allowed to extend around or into. One or more arm attachment openings 1006 are formed into the arm attachment interface 1005. Referring to Fig. 12, a fastener 201 is allowed to extend into openings 904, 1006 at the arm 108 and the arm attachment interface 1005 to affix the arm 108 thereto. In some embodiments, the arm attachment interface 1005 may form a separable structure from the plate 1010. For instance, the arm attachment interface 1005 may include a threaded portion receivable at a threaded interface or fastener at the plate 1010. In other embodiments, the arm attachment interface 1005 may be integrally formed with the plate 1010.

Referring to Figs. 10A-10C, and furthermore to Fig. 13, in some embodiments, the closure bracket 109 may include a cable mount plate 1001 extending substantially co-directional to an extension of the cable 1301 (Fig. 13) into, or out of, the closure assembly 102. The cable mount plate 1001 may include a cable mount plate opening 1302 through which a fastener, tie-wrap, clamp, or strap 1303 may extend through and around the cable 1301 (Fig. 13). Embodiments of the closure bracket 109 such as described may provide a strain relief mount for the cables extending through the closure assembly 102. In some embodiments, the cable mount plate 1001 forms one or more grooves or indentations 1304 at which a strap 1303 may position. The strap 1303 may form a removable mechanical compression strap configured to secure the closure assembly 102 to the cable 1301.

Referring to Fig. 11, the closure bracket 106 may be keyed 1102 such that the closure 112 is properly oriented relative to the closure bracket 106, arm 108, and rail 104.

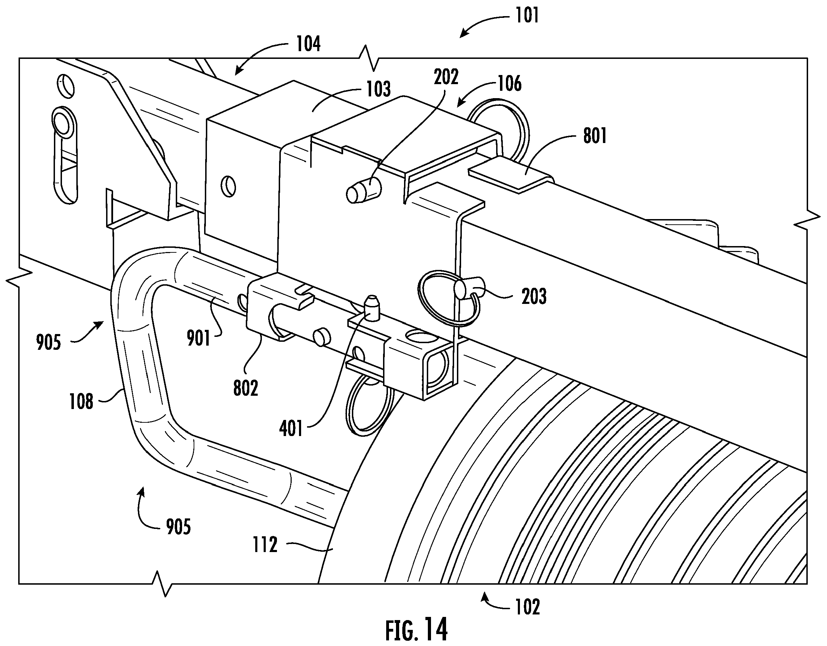

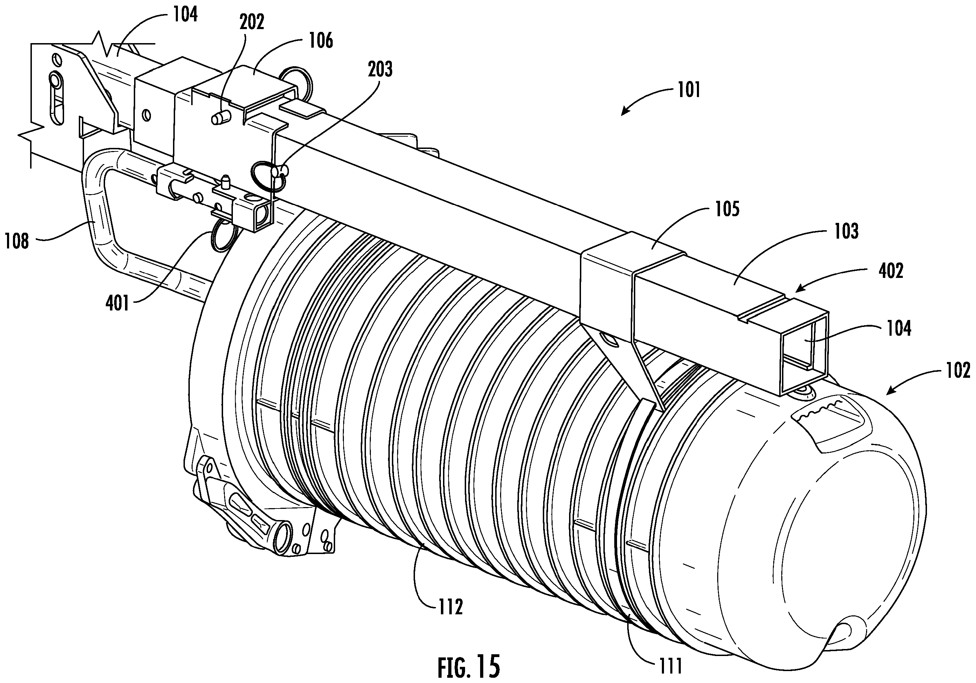

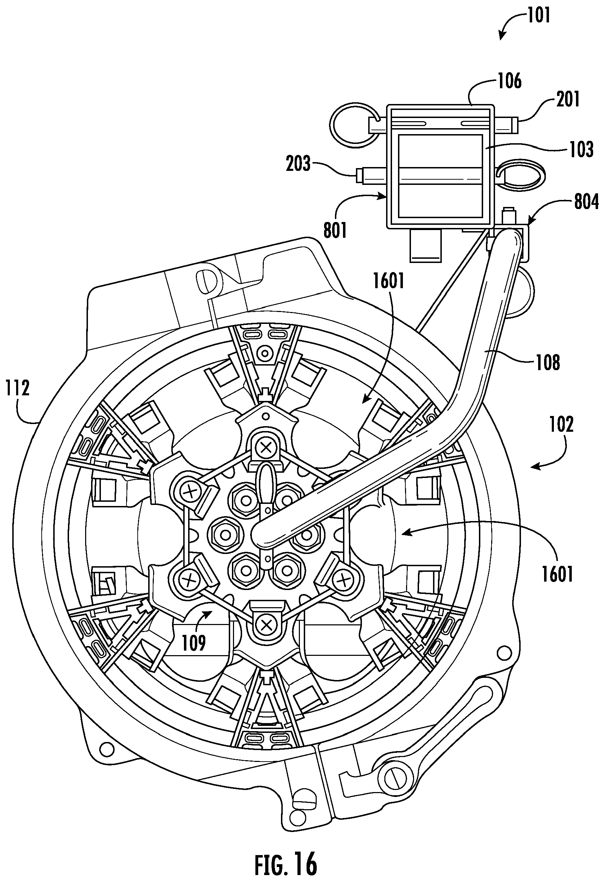

Referring to Figs. 14-16, the arm 108 includes a plurality of curved portions 905 forming a substantially "U-shaped" structure. Referring to Fig. 16, the curved portion(s) 905 at the arm 108 allow the arm 108 to avoid cable port(s) 1601, such as to avoid cables 1301 extending into and out of the closure assembly 102. For instance, the arm 108 extends from the closure bracket 109 to the rail 104 between circumferentially adjacent cable ports 1601 (Fig. 16). Fasteners 201, 202, 203, 401 may form quick-release pins, such as to allow a user to quickly connect or disconnect one or more components from one another, or to orient or re-orient one or more components relative to another, such as depicted and described herein.

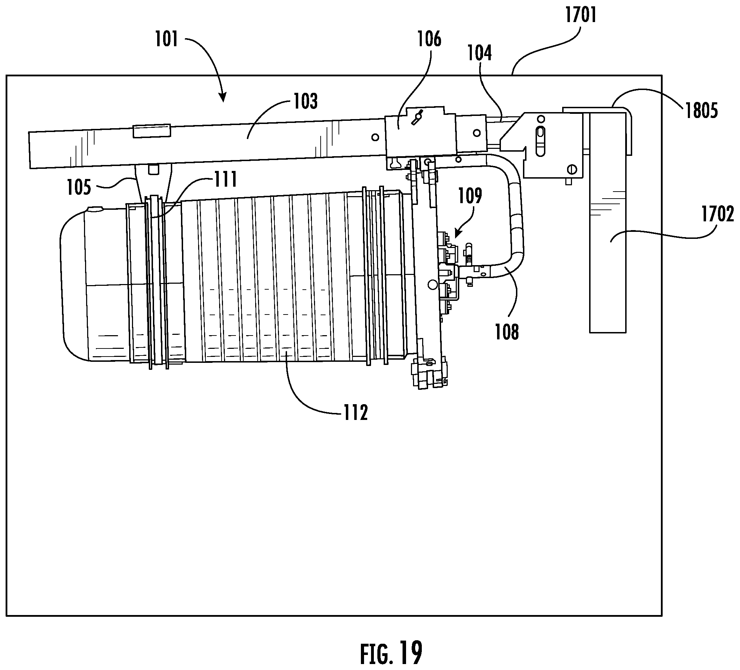

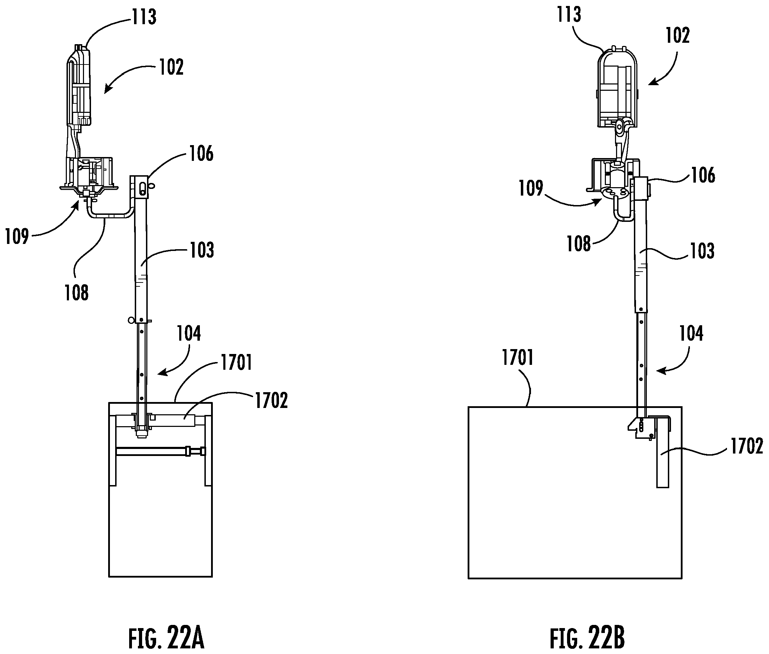

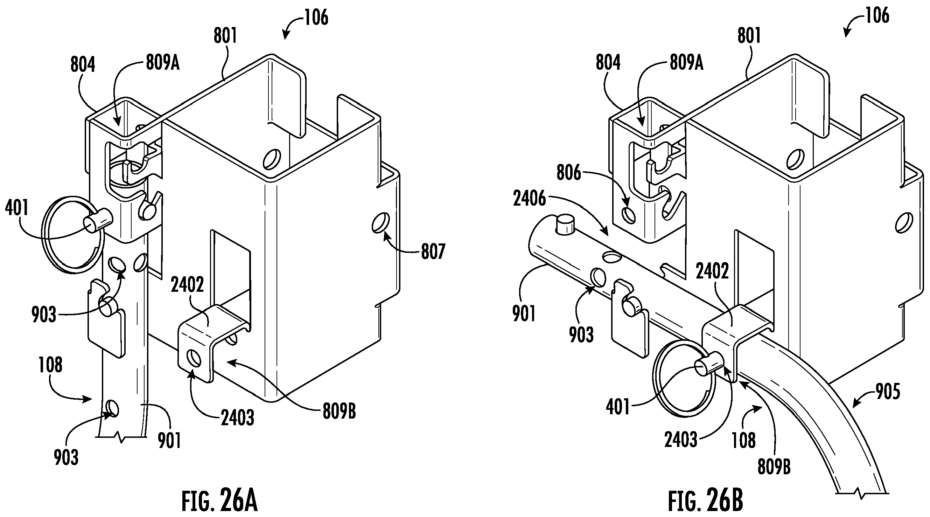

Referring now to Figs. 17-23, depictions of exemplary positions and articulations of the mount system 101 in accordance with methods for operation of the mount system 101 are depicted. Embodiments of the mount system 101 may allow for two or more closure assemblies 102 to be positioned within an enclosed volume 1701, such as a confined space, underground volume, or handhole. Figs. 18A-18B depict an embodiment of the rail 104 articulating from a first position (e.g., horizontal) to a second position (e.g., vertical). For instance, Fig. 17 and Fig. 19 may each depict the closure assembly 102 attached to the rail 104 within the enclosed volume 1701 in the first position, such as a stored position. A user may articulate the rail 104 to the second position to articulate the closure assembly 102 out of the enclosed volume 1701, such as depicted in Fig. 20. The user may furthermore remove one or more fasteners from the sleeve 103 and rail 104. The user may remove the linkage 111 and forward bracket 105 from the sleeve 103. The user may extend the sleeve 103 along the rail 104, such as toward a distal end, e.g., at or proximate to the position of the forward bracket 105, with the closure assembly 102 attached thereto by the housing bracket 106 and arm 108, such as depicted in Fig. 21, Figs. 22A-22B, Figs. 23A-23B. The user may re-attach the fastener(s) through the sleeve 103 and rail 104 to affix the sleeve 103 and closure assembly 102 to the rail 104 in the vertically extended position, such as depicted in Fig. 21, Figs. 22A-22B. The closure 112 may be removed, such as to expose internal portions 113 of the closure assembly 102, and the user may operate at the closure assembly 102 at a desired vertical height relative to the user, such as to promote health, safety, and ergonomic work practices. The user may furthermore rotate the closure assembly 102 to a horizontal position, such as depicted at Figs. 23A-23B, and further described in regard to Figs. 26A-26B.

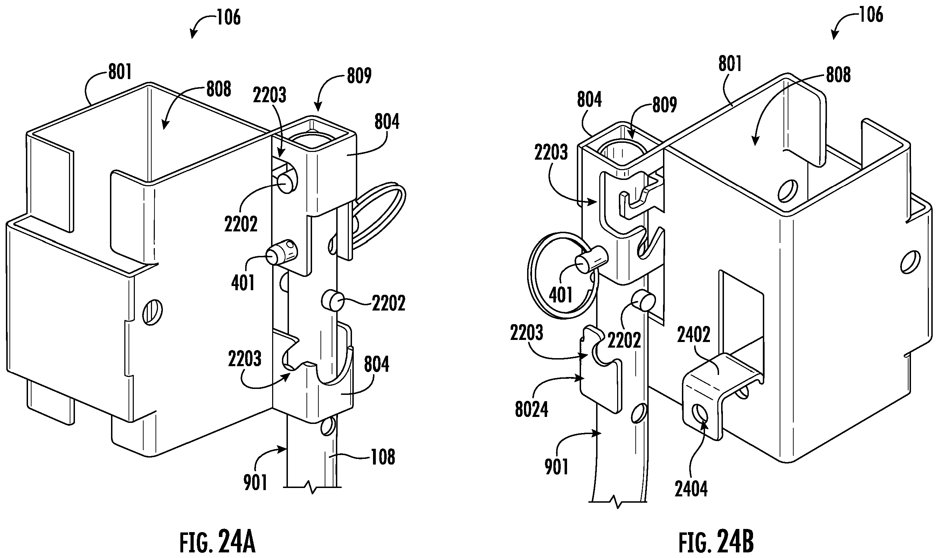

Referring now to Figs. 24-26, perspective views of positions of the arm 108 at the housing bracket 106 are provided. Housing bracket 106 is configured to allow the closure assembly 102 to rotate to various positions, such as further described herein. Some embodiments of the housing bracket 106 form a guide member pathway 2203 at the arm body portion 804. The arm 108 includes a guide member 2202, such as a bump, wall, raised material, or pin, configured to travel through the guide member pathway 2203. The guide member pathway 2203 forms a tortuous or serpentine pathway extending angularly around the arm body portion 804. For instance, the guide member pathway 2203 may extend up to approximately 45 degrees, or up to approximately 60 degrees, or up to approximately 90 degrees, or up to approximately 135 degrees, or up to approximately 180 degrees (e.g., to one, or two, or three sides of a rectangular cross section arm body portion).

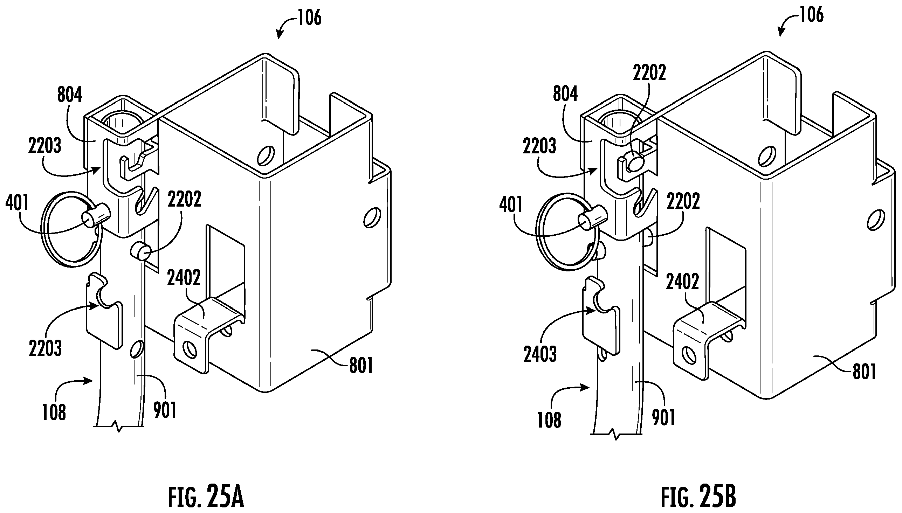

The arm 108 is depicted positioned in a stored position (e.g., a first rotational position, such as corresponding to the closure assembly 102 within the enclosed volume 1701), such as depicted at Figs. 24A-24B. The guide member 2202 at the arm 108 is allowed to travel through the guide member pathway 2203 at the arm body portion 804. The arm 108 is depicted rotating from the first rotational position (e.g., such as depicted in Figs. 25A, 24A-24B) toward a second rotational position, such as depicted in Fig. 25B. The guide member 2202 is allowed to travel through the guide member pathway 2203, such as depicted in Fig. 25B. Fig. 26A depicts the guide member 2202 of the arm 108 having traveled through the guide member pathway 2203 to the second rotational position. The housing bracket 106 may include a support platform 2402 against which the arm 108 reacts when the arm 108 is rotated to a third rotational position, such as depicted in Fig. 26B. In some embodiments, the arm body portion 804 forms a gap 2406, such as to separate the arm body portion 804 into two or more segments. The guide member 2202 is allowed to position or seat at a portion of the guide member pathway 2203 adjacent to the support platform 2402. The support platform 2402 may furthermore form an opening 2404 through which a fastener 401 is allowed to extend through the arm 108 and housing bracket 106, such as to fix the arm 108, and the closure assembly 102 attached thereto, in the third rotational position.

Referring to Figs. 26A-26B, in various embodiments, arm 108 may form a plurality of first end openings 903A, 903B. First end opening 903A may be positioned to receive the fastener 401 through opening 806 at the arm body portion 804, such as to affix the arm 108 to the housing bracket 106 in a vertical position (e.g., depicted in Fig. 21, Figs. 22A-22B), such as depicted in Fig. 26A. First end opening 903B may be positioned to receive the fastener 401 through opening 2403 at the support platform 2402, such as to affix the arm 108 to the housing bracket 106 in a horizontal position (e.g., depicted in Figs. 23A-23B). In various embodiments, the arm body portion 804 and the support platform 2402 are positioned in axes offset from one another, such as to allow the arm 108 (e.g., the first end portion 901 of the arm 108) to rotate (e.g., up to 90 degrees) from a first arm passage 809A to a second arm passage 809B formed, at least in part, at the support platform 2402. For instance, Fig. 23A provides an exemplary depiction of the closure assembly 102 attached to the arm 108 extending through the second arm passage 809B, such as to orient an extension of the closure assembly 102 (e.g., the second axis 12) substantially perpendicular to an extension of the mount bar 1803 of the rail 104 (e.g., the first axis 11).

Embodiments of fasteners depicted and described herein may form pins or threaded members (e.g., screws, bolts, tie-rods, threaded shanks, etc.). Openings into which fasteners are provided may include threads configured to receive threads at the fastener. Fasteners depicted and described herein may extend through the structure, such as to allow a nut of any appropriate type to be received at an end of the fastener opposite of the head.

Components depicted and described herein may be formed of any material of appropriate strength, durability, or flexibility, such as, but not limited to, stainless steel, aluminum, plastic, composites, or combinations thereof.

Embodiments of the mount system 101 depicted and described herein may allow for universal and standardized placement, attachment, and securing of a fiber optic closure in an enclosed volume, such as an underground volume, confined space, or handhole. Embodiments provided herein may allow for horizontal translation, vertical translation, rotation, or combinations thereof, of the fiber optic closure within or out of an underground or enclosed volume. Additionally, or alternatively, embodiments of the mount system 101 provided herein may allow for the fiber optic closure to be articulated, such as translated, rotated, extended, or combinations thereof, to a height or location that facilitates operation by a technician at the fiber optic closure. Such articulation may facilitate ergonomic placement, provide improved articulation and adjustment of the fiber optic closure, promote health and safety, and allow for attachment of the mount system to various types of fiber optic closures and mount interfaces.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A mount system (101) for a telecommunications closure (102), the mount system (101) comprising:
an arm (108) comprising a curved portion (905) positioned between a first end portion (901) and a second end portion (902), the arm (108) forming a first end opening (903) into which a first fastener (401) is extendable and a second end opening (904) into which a second fastener (401) is extendable;
a first bracket (106) attachable to a rail (104), the first bracket (106) comprising a rail body portion (801) into which the rail (104) is extendable, wherein the rail body portion (801) forms a rail body opening (805) into which a third fastener (202) is extendable, the first bracket (106) comprising an arm body portion (804) into which the first end portion (901) of the arm (108) is extendable, wherein the arm body portion (804) forms an arm body opening (806) into which the first fastener (401) is extendable; and
a second bracket (109) attachable to the telecommunications closure (102), wherein the second bracket (109) comprises an arm attachment interface (1005) at which the second end portion arm (902) of the arm (108) is attachable, wherein the second bracket (109) comprises a mount interface (1004) at which the second bracket (109) is attachable to the telecommunications closure (102).

2. The mount system (101) of claim 1, wherein the first bracket (106) forms a guide member pathway (2203) through which a guide member (2202) at the arm (108) is permitted to travel through the guide member pathway (2203).

3. The mount system (101) of claim 2, wherein the guide member (2202) at the arm (108) is depressible to allow the guide member (2202) to selectively enter the guide member pathway (2203).

4. The mount system (101) of claim 2, wherein the guide member pathway (2203) is formed at the arm body portion (804) of the first bracket (106).

5. The mount system (101) of claim 2, wherein the guide member pathway (2203) forms a tortious circuit extending up to approximately 90 degrees relative to the arm (108) extended into an arm passage (809) formed at the arm body portion (804).

6. The mount system (101) of claim 1, wherein the arm body portion (804) forms an arm passage (809) into which the arm (108) is extendable, and wherein the arm body portion (804) forms at least a portion of the arm passage (809) to extend co-directional to an extension of the rail (104) at which the first bracket (106) is attachable.

7. The mount system (101) of claim 1, wherein the arm body portion (804) forms a first arm passage (809A) into which the arm (108) is extendable co-directional to an extension of the rail (104) at which the first bracket (106) is attachable, and wherein the first bracket (106) comprises a support platform (2402), wherein the support platform (2402) forms, at least in part, a second arm passage (809B) through which the arm (108) is extendable up to approximately 90 degrees offset relative to the first arm passage (809A).

8. The mount system (101) of claim 7, wherein the support platform (2402) forms a support platform opening through which the first fastener (401) is extendable.

9. The mount system (101) of claim 1, comprising:
a sleeve (103) extendable around at least a portion of the rail (104), wherein the first bracket (106) is configured to receive the sleeve (103) through the rail body portion (801) into which the rail (104) is extendable.

10. The mount system (101) of claim 9, wherein the sleeve (103) forms a sleeve opening through which the third fastener (202) is extendable into the rail body opening (805) at the first bracket (106).

11. The mount system (101) of claim 9, wherein the sleeve (103) forms a groove (402) at which a fourth fastener (202) is receivable, and wherein the first bracket (106) forms a rail-groove opening (807) into which the fourth fastener (202) is receivable to the groove (402).

12. The mount system (101) of claim 1, comprising:
a third bracket (105) attachable to the rail (104), the third bracket (105) comprising a rail attachment portion (601) and a linkage attachment portion (602), the rail attachment portion (601) configured to couple to the rail (104), the linkage attachment portion (602) configured to couple to the telecommunications closure (102).

13. The mount system (101) of claim 12, wherein the linkage attachment portion (602) extends at an acute angle relative to the rail attachment portion (601).

14. The mount system (101) of claim 12, wherein the rail attachment portion (601) forms an open-sided geometry at which the rail attachment portion (601) is allowed to wrap at least partially around the rail (104) from a radial direction relative to an axis of extension of the rail (104).

15. The mount system (101) of claim 12, wherein the linkage attachment portion (602) comprises a linkage opening at which a linkage at the telecommunications closure (102) is permitted to attach to the linkage attachment portion (602).

16. The mount system (101) of claim 1, wherein the curved portion (905) of the arm (108) is configured to extend from a first axis along which the rail (104) is extended to a second axis along which the telecommunications closure (102) is extended.

17. The mount system (101) of claim 16, wherein the curved portion (905) extends the arm (108) between circumferentially adjacent ports (1601) at the second bracket (109).

18. The mount system (101) of claim 1, the second bracket (109) comprising a plate (1001) forming a mount interface at which a closure-bracket fastener (201) is extendable to attach the second bracket (109) to the telecommunications closure (102).

19. The mount system (101) of claim 1, the second bracket (109) comprising a mount plate (1001) extending at least partially co-directional to an extension of a port through which a cable is allowed to extend.

20. The mount system (101) of claim 19, the second bracket (109) forming a mount plate opening (1302) at which a cable fastener (1303) may extend to couple a cable to the second bracket (109).

## Patentansprüche

1. Montagesystem (101) für ein Telekommunikations-Verschlusselement (102), wobei das Montagesystem (101) Folgendes umfasst:
einen Arm (108), der einen gekrümmten Abschnitt (905) umfasst, der zwischen einem ersten Endabschnitt (901) und einem zweiten Endabschnitt (902) positioniert ist, wobei der Arm (108) eine erste Endöffnung (903), in die ein erstes Befestigungselement (401) erstreckbar ist, und eine zweite Endöffnung (904) bildet, in die ein zweites Befestigungselement (401) erstreckbar ist;
eine erste Halterung (106), die an einer Schiene (104) befestigbar ist, wobei die erste Halterung (106) einen Schienenkörperabschnitt (801) umfasst, in den die Schiene (104) erstreckbar ist, wobei der Schienenkörperabschnitt (801) eine Schienenkörperöffnung (805) bildet, in die ein drittes Befestigungselement (202) erstreckbar ist, wobei die erste Halterung (106) einen Armkörperabschnitt (804) umfasst, in den der erste Endabschnitt (901) des Arms (108) erstreckbar ist, wobei der Armkörperabschnitt (804) eine Armkörperöffnung (806) bildet, in die das erste Befestigungselement (401) erstreckbar ist; und
eine zweite Halterung (109), die an dem Telekommunikations-Verschlusselement (102) befestigbar ist, wobei die zweite Halterung (109) eine Armbefestigungsschnittstelle (1005) umfasst, an welcher der zweite Endabschnittsarm (902) des Arms (108) befestigbar ist, wobei die zweite Halterung (109) eine Montageschnittstelle (1004) umfasst, an der die zweite Halterung (109) am Telekommunikations-Verschlusselement (102) befestigbar ist.

2. Montagesystem (101) nach Anspruch 1, wobei die erste Halterung (106) einen Führungselementpfad (2203) bildet, durch den hindurch es einem Führungselement (2202) an dem Arm (108) gestattet ist, den Führungselementpfad (2203) zu durchlaufen.

3. Montagesystem (101) nach Anspruch 2, wobei das Führungselement (2202) an dem Arm (108) eindrückbar ist, um dem Führungselement (2202) zu ermöglichen, selektiv in den Führungspfad (2203) einzutreten.

4. Montagesystem (101) nach Anspruch 2, wobei der Führungselementpfad (2203) an dem Armkörperabschnitt (804) der ersten Halterung (106) gebildet ist.

5. Montagesystem (101) nach Anspruch 2, wobei der Führungselementpfad (2203) einen gewundenen Verlauf bildet, der sich bis zu annähernd 90 Grad relativ zu dem Arm (108) erstreckt, der in einen Armdurchgang (809) erstreckt ist, der an dem Armkörperabschnitt (804) gebildet ist.

6. Montagesystem (101) nach Anspruch 1, wobei der Armkörperabschnitt (804) einen Armdurchgang (809) bildet, in den der Arm (108) erstreckbar ist, und wobei der Armkörperabschnitt (804) mindestens einen Abschnitt des Armdurchgangs (809) bildet, um sich gleichgerichtet zu einer Erstreckung der Schiene (104) zu erstrecken, an der die erste Halterung (106) befestigbar ist.

7. Montagesystem (101) nach Anspruch 1, wobei der Armkörperabschnitt (804) einen ersten Armdurchgang (809A) bildet, in den der Arm (108) gleichgerichtet zu einer Erstreckung der Schiene (104) erstreckbar ist, an der die erste Halterung (106) befestigbar ist, und wobei die erste Halterung (106) eine Stützplattform (2402) umfasst, wobei die Stützplattform (2402) mindestens teilweise einen zweiten Armdurchgang (809B) bildet, durch den der Arm (108) bis zu annähernd 90 Grad relativ zum ersten Armdurchgang (809A) versetzt erstreckbar ist.

8. Montagesystem (101) nach Anspruch 7, wobei die Stützplattform (2402) eine Stützplattformöffnung bildet, durch die das erste Befestigungselement (401) erstreckbar ist.

9. Montagesystem (101) nach Anspruch 1, umfassend:
eine Hülse (103), die um mindestens einen Abschnitt der Schiene (104) erstreckbar ist, wobei die erste Halterung (106) ausgebildet ist, um die Hülse (103) durch den Schienenkörperabschnitt (801) aufzunehmen, in den die Schiene (104) erstreckbar ist.

10. Montagesystem (101) nach Anspruch 9, wobei die Hülse (103) eine Hülsenöffnung bildet, durch die das dritte Befestigungselement (202) in die Schienenkörperöffnung (805) an der ersten Halterung (106) erstreckbar ist.

11. Montagesystem (101) nach Anspruch 9, wobei die Hülse (103) eine Nut (402) bildet, an der ein viertes Befestigungselement (202) aufnehmbar ist, und wobei die erste Halterung (106) eine Schienen-Nut-Öffnung (807) bildet, in die das vierte Befestigungselement (202) zur Nut (402) hin aufnehmbar ist.

12. Montagesystem (101) nach Anspruch 1, umfassend:
eine dritte Halterung (105), die an der Schiene (104) befestigbar ist, wobei die dritte Halterung (105) einen Schienenbefestigungsabschnitt (601) und einen Anbindungsbefestigungsabschnitt (602) umfasst, wobei der Schienenbefestigungsabschnitt (601) ausgebildet ist, um an die Schiene (104) gekoppelt zu werden, wobei der Anbindungsbefestigungsabschnitt (602) ausgebildet ist, um an das Telekommunikations-Verschlusselement (102) gekoppelt zu werden.

13. Montagesystem (101) nach Anspruch 12, wobei sich der Anbindungsbefestigungsabschnitt (602) in einem spitzen Winkel relativ zu dem Schienenbefestigungsabschnitt (601) erstreckt.

14. Montagesystem (101) nach Anspruch 12, wobei der Schienenbefestigungsabschnitt (601) eine seitlich offene Geometrie bildet, an der es dem Schienenbefestigungsabschnitt (601) ermöglicht wird, sich mindestens teilweise aus einer radialen Richtung relativ zu einer Erstreckungsachse der Schiene (104) um die Schiene (104) zu wickeln.

15. Montagesystem (101) nach Anspruch 12, wobei der Anbindungsbefestigungsabschnitt (602) eine Anbindungsöffnung umfasst, an der es einer Anbindung an dem Telekommunikations-Verschlusselement (102) gestattet ist, an dem Anbindungsbefestigungsabschnitt (602) befestigt zu werden.

16. Montagesystem (101) nach Anspruch 1, wobei der gekrümmte Abschnitt (905) des Arms (108) ausgebildet ist, um sich von einer ersten Achse, entlang der die Schiene (104) erstreckt ist, zu einer zweiten Achse zu erstrecken, entlang der das Telekommunikations-Verschlusselement (102) erstreckt ist.

17. Montagesystem (101) nach Anspruch 16, wobei der gekrümmte Abschnitt (905) den Arm (108) zwischen in Umfangsrichtung benachbarten Anschlüssen (1601) an der zweiten Halterung (109) erstreckt.

18. Montagesystem (101) nach Anspruch 1, wobei die zweite Halterung (109) eine Platte (1001) umfasst, die eine Montageschnittstelle bildet, an der ein Befestigungselement der Verschlusselementhalterung (201) erstreckbar ist, um die zweite Halterung (109) an dem Telekommunikations-Verschlusselement (102) zu befestigen.

19. Montagesystem (101) nach Anspruch 1, wobei die zweite Halterung (109) eine Montageplatte (1001) umfasst, die sich mindestens teilweise gleichgerichtet zu einer Erstreckung eines Anschlusses erstreckt, durch den es einem Kabel ermöglicht wird, sich zu erstrecken.

20. Montagesystem (101) nach Anspruch 19, wobei die zweite Halterung (109) eine Montageplattenöffnung (1302) bildet, an der sich ein Kabelbefestigungselement (1303) erstrecken kann, um ein Kabel an die zweite Halterung (109) zu koppeln.

## Revendications

1. Système de montage (101) pour une fermeture de télécommunications (102), le système de montage (101) comprenant :
un bras (108), comprenant une portion incurvée (905) positionnée entre une première portion d'extrémité (901) et une deuxième portion d'extrémité (902), le bras (108) formant une première ouverture d'extrémité (903) dans laquelle un premier élément de fixation (401) peut s'étendre et une deuxième ouverture d'extrémité (904) dans laquelle un deuxième élément de fixation (401) peut s'étendre ;
un premier support (106), apte à être fixé à un rail (104), le premier support (106) comprenant une portion (801) de corps de rail dans laquelle le rail (104) peut être introduit, dans lequel la portion (801) de corps de rail forme une ouverture (805) de corps de rail dans laquelle un troisième élément de fixation (202) est apte à être introduit, le premier support (106) comprenant une portion (804) de corps de bras dans laquelle la première portion d'extrémité (901) du bras (108) est apte à être introduite, dans lequel la portion (804) de corps de bras forme une ouverture (806) de corps de bras dans laquelle le premier élément de fixation (401) est apte à être introduit ; et
un deuxième support (109), apte à être fixé à la fermeture de télécommunications (102), dans lequel le deuxième support (109) comprend une interface (1005) de fixation de bras au niveau de laquelle la deuxième portion d'extrémité (902) du bras (108) est apte à être fixée, dans lequel le deuxième support (109) comprend une interface de montage (1004), au niveau de laquelle le deuxième support (109) est apte à être fixé à la fermeture de télécommunications (102).

2. Système de montage (101) selon la revendication 1, dans lequel le premier support (106) forme un chemin (2203) d'organe de guidage à travers lequel un organe de guidage (2202) au niveau du bras (108) est rendu apte à se déplacer à travers le chemin (2203) d'organe de guidage.

3. Système de montage (101) selon la revendication 2, dans lequel l'organe de guidage (2202) au niveau du bras (108) est enfonçable pour permettre à l'organe de guidage (2202) d'entrer sélectivement dans le chemin (2203) d'organe de guidage.

4. Système de montage (101) selon la revendication 2, dans lequel le chemin (2203) d'organe de guidage est formé au niveau de la portion (804) de corps de bras du premier support (106).

5. Système de montage (101) selon la revendication 2, dans lequel le chemin (2203) d'organe de guidage forme un circuit tortueux s'étendant jusqu'à approximativement 90 degrés par rapport au bras (108) étendu dans un passage de bras (809) formé au niveau de la portion (804) de corps de bras.

6. Système de montage (101) selon la revendication 1, dans lequel la portion (804) de corps de bras forme un passage de bras (809) dans lequel le bras (108) est apte à être introduit, et dans lequel la portion (804) de corps de bras forme au moins une partie (809) du passage de bras pour s'étendre de manière co-directionnelle à une extension du rail (104) au niveau duquel le premier support (106) est apte à être fixé.

7. Système de montage (101) selon la revendication 1, dans lequel la portion (804) de corps de bras forme un premier passage (809A) de bras dans lequel le bras (108) est apte à être introduit de manière codirectionnelle à une extension du rail (104) au niveau duquel le premier support (106) est apte à être fixé, et dans lequel le premier support (106) comprend une plateforme d'appui (2402), dans lequel la plateforme d'appui (2402) forme, au moins en partie, un deuxième passage (809B) de bras à travers lequel le bras (108) est apte à être introduit jusqu'à approximativement 90 degrés de décalage par rapport au premier passage (809A) de bras.

8. Système de montage (101) selon la revendication 7, dans lequel la plateforme d'appui (2402) forme une ouverture de plateforme d'appui à travers laquelle le premier élément de fixation (401) est apte à être introduit.

9. Système de montage (101) selon la revendication 1, comprenant :
un manchon (103) apte à entourer au moins une partie du rail (104), dans lequel le premier support (106) est configuré pour recevoir le manchon (103) à travers la portion (801) de corps de rail dans laquelle le rail (104) est apte à être introduit.

10. Système de montage (101) selon la revendication 9, dans lequel le manchon (103) forme une ouverture de manchon à travers laquelle le troisième élément de fixation (202) est apte à être introduit dans l'ouverture (805) de corps de rail au niveau du premier support (106).

11. Système de montage (101) selon la revendication 9, dans lequel le manchon (103) forme une rainure (402) au niveau de laquelle un quatrième élément de fixation (202) est apte à être reçu, et dans lequel le premier support (106) forme une ouverture (807) de rainure de rail dans laquelle le quatrième élément de fixation (202) est apte à être reçu jusque dans la rainure (402).

12. Système de montage (101) selon la revendication 1, comprenant :
un troisième support (105) apte à être fixé au rail (104), le troisième support (105) comprenant une portion (601) de fixation au rail et une portion (602) de fixation de la liaison, la portion (601) de fixation au rail étant configurée pour être reliée au rail (104), la portion (602) de fixation de la liaison étant configurée pour être reliée à la fermeture de télécommunications (102).

13. Système de montage (101) selon la revendication 12, dans lequel la portion (602) de fixation de la liaison s'étend selon un angle aigu par rapport à la portion (601) de fixation au rail.

14. Système de montage (101) selon la revendication 12, dans lequel la portion (601) de fixation au rail forme une géométrie à côté ouvert au niveau de laquelle la portion (601) de fixation au rail est rendue apte à au moins partiellement envelopper le rail (104) depuis une direction radiale par rapport à un axe d'extension du rail (104).

15. Système de montage (101) selon la revendication 12, dans lequel la portion (602) de fixation de la liaison comprend une ouverture de liaison au niveau de laquelle une liaison au niveau de la fermeture de télécommunications (102) est rendue apte à être fixée à la portion (602) de fixation de la liaison.

16. Système de montage (101) selon la revendication 1, dans lequel la portion incurvée (905) du bras (108) est configurée pour s'étendre d'un premier axe le long duquel le rail (104) s'étend vers un deuxième axe le long duquel la fermeture de télécommunications (102) s'étend.

17. Système de montage (101) selon la revendication 16, dans lequel la portion incurvée (905) étend le bras (108) entre des orifices (1601) adjacents sur la circonférence au niveau du deuxième support (109).

18. Système de montage (101) selon la revendication 1, le deuxième support (109) comprenant une plaque (1001) formant une interface de montage au niveau de laquelle un élément de fixation de fermeture-support (201) est apte à être introduit pour fixer le deuxième support (109) à la fermeture de télécommunications (102).

19. Système de montage (101) selon la revendication 1, le deuxième support (109) comprenant une plaque de montage (1001) s'étendant au moins partiellement de manière co-directionnelle à une extension d'un orifice à travers lequel un câble est rendu apte à s'étendre.

20. Système de montage (101) selon la revendication 19, le deuxième support (109) formant une ouverture (1302) de plaque de montage au niveau de laquelle un élément (1303) de fixation de câble est apte à être introduit afin de relier un câble au deuxième support (109).
